**Europäisches Patentamt**

**European Patent Office**

**Office européen des brevets**

(19)

(11) Veröffentlichungsnummer: **0 131 871**
**B1**

(12)

# EUROPÄISCHE PATENTSCHRIFT

(45) Veröffentlichungstag der Patentschrift:
**13.05.87**

(51) Int. Cl.⁴: **B 60 P 1/44**

(21) Anmeldenummer: **84107931.2**

(22) Anmeldetag: **06.07.84**

(54) **Ladebordwand aus Metall.**

(30) Priorität: **15.07.83 AT 2600/83**

(43) Veröffentlichungstag der Anmeldung:
**23.01.85 Patentblatt 85/4**

(45) Bekanntmachung des Hinweises auf die Patenterteilung:
**13.05.87 Patentblatt 87/20**

(84) Benannte Vertragsstaaten:
**CH DE FR LI NL SE**

(56) Entgegenhaltungen:
**EP - A - 0 081 115**
**DE - A - 3 027 646**
**DE - A - 3 129 789**
**US - A - 3 474 921**

(73) Patentinhaber: **Austria Metall Aktiengesellschaft,**
**A-5282 Braunau am Inn (AT)**

(72) Erfinder: **Falk, Friedrich, Mozartstrasse 56,**
**A-5282 Braunau am Inn (AT)**

(74) Vertreter: **Hain, Leonhard, Dipl.-Ing., Tal 18/IV,**
**D-8000 München 2 (DE)**

ACTORUM AG

## Beschreibung

Die Erfindung betrifft eine an Hubarmen angelenkte Ladebordwand, insbesondere aus Aluminium-Profilen.

Bei einer bekannten Plattform dieser Art (EP-A-O 081 115) sind langgelegte plattenbildende Metall- oder Kunststoffprofile am einen Ende durch ein querliegendes Anschlussprofil mit Anschlusslaschen miteinander verbunden. Das Anschlussprofil ist dabei trogförmig und an seiner offenen Seite durch die Endabschnitte der Plattenprofile abgedeckt, so dass ein geschlossener verwindungssteifer Hohlkasten gebildet wird. Das Verbinden der Anschlusslaschen mit dem trogförmigen Anschlussprofil sowie auch die Herstellung dieses Anschlussprofiles selbst erfordert einen gewissen Aufwand. Auch hinsichtlich der Anbringung der Anschlusslaschen, insbesondere hinsichtlich ihrer Abstände und Bohrungen, sind noch Beschränkungen gegeben.

Der Erfindung liegt daher die Aufgabe zugrunde, eine Ladebordwand zu schaffen, die einfacher im Aufbau ist und sich besser an die verschiedensten Anschlussgegebenheiten anpassen lässt.

Diese Aufgabe wird erfindungsgemäss an einer Ladebordwand durch die Kennzeichnungsmerkmale des Patentanspruches 1 gelöst.

Die erfindungsgemässe Ladebordwand lässt sich besonders einfach oder vorteilhaft herstellen, weil der Anschlusskasten im wesentlichen aus im Strangformverfahren herzustellenden und ähnlichen Grundprofilen besteht, die sich unter Berücksichtigung abweichender Abstände ohne Mehraufwand miteinander verbinden lassen und darin auch die Laschenbohrungen leicht und allen Gegebenheiten angepasst ausgebildet werden können. Zudem zeichnet sich dieser Anschlusskasten durch eine äusserst hohe Verwindungssteifigkeit aus.

Weitere Merkmale der Erfindung sind in Unteransprüchen beansprucht.

Die Erfindung wird anhand eines Ausführungsbeispiels, das auch in der Zeichnung schematisiert dargestellt ist, näher beschrieben.

Es zeigen:

Fig. 1 einen Querschnitt durch die Grundprofile,

Fig. 2 eine perspektivische Ansicht eines Anschlusskastens für die Hubarme,

Fig. 3 einen in eine Plattform eingeschweissten Anschlusskasten und

Fig. 4 einen Längsschnitt durch den Anschlusskasten.

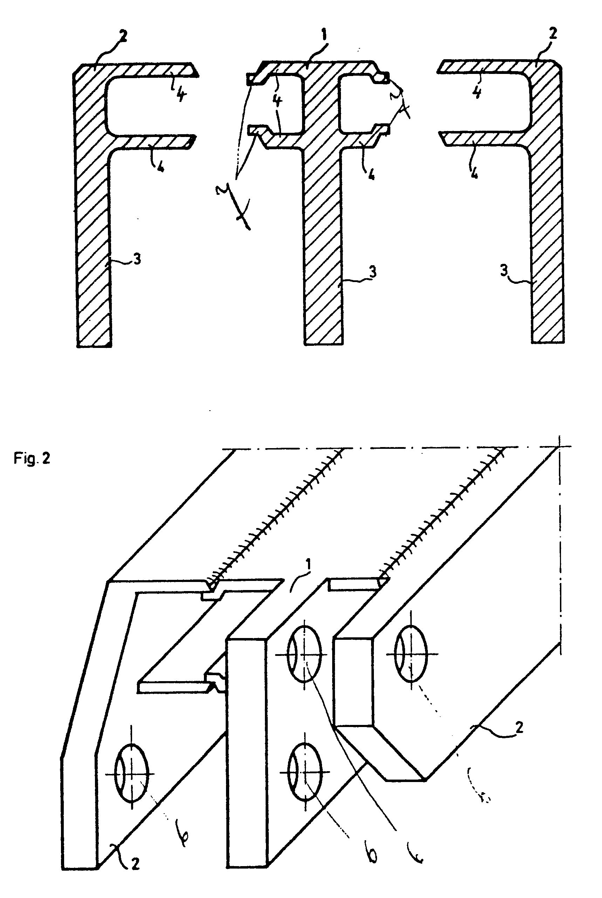

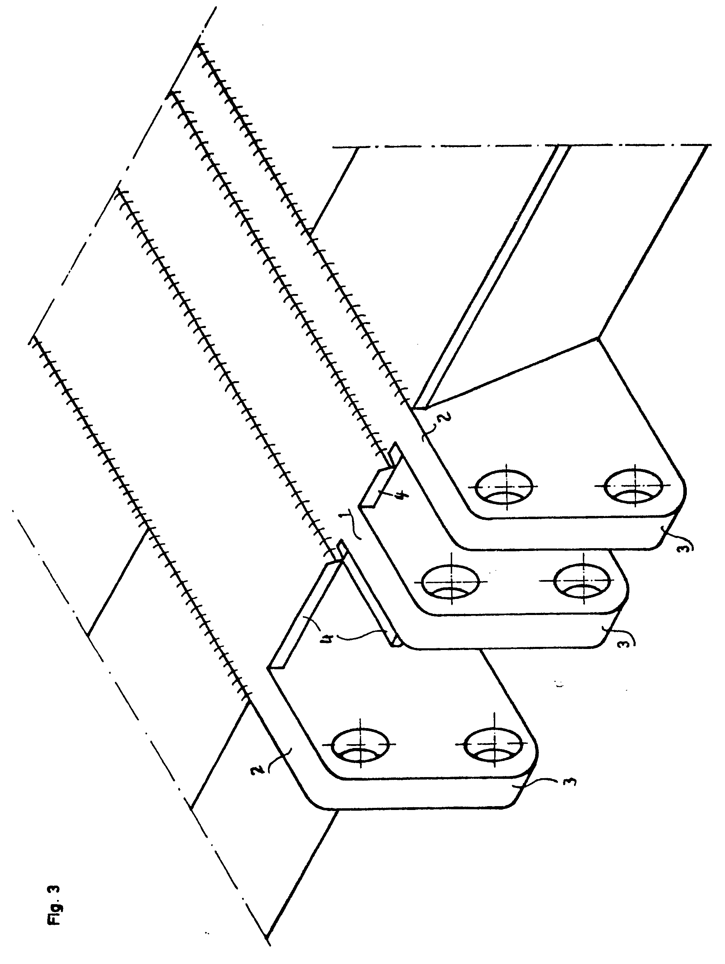

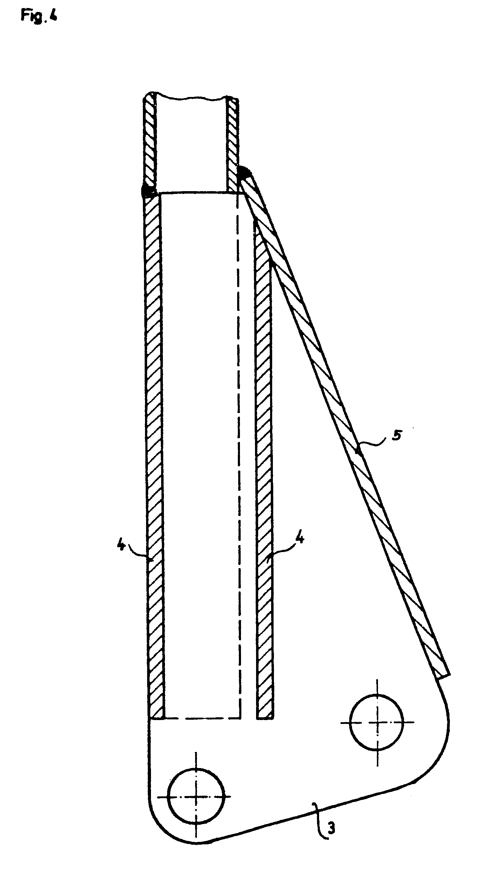

Aus zwei verschiedenen Grundprofilen 1 und 2 (Fig. 1) wird ein Kasten gebildet, bei dem das mittlere Profil 1 bleibt und von den beiden äusseren Profilen 2 die beiden Schenkel 4 entsprechend dem erforderlichen Abstand der Lasche besäumt werden. Die einzelnen Laschen und selbst die Stege 3 können den Erfordernissen entsprechend beschnitten und gebohrt werden. Die drei Profile 1, 2 werden verschweisst, so dass sie einen kompletten Kasten ergeben (Fig. 2), über welchen auf das untere Abschlussprofil und die Plattform, in welche dieser Kasten eingepasst wird, die Anschlusskräfte übertragen werden. In Fig. 3 ist der komplette Kasten, der beispielsweise für eine andere Möglichkeit der Laschenausführung ausgeführt ist, im eingeschweissten Zustand in der Plattform dargestellt.

Der Kasten wird abschliessend mit einem unteren Abdeckblech 5 gemäss Fig. 4 versehen. Hier ist ausserdem noch zu sehen, dass die beiden Schenkel 4 zur Übertragung der Anschlussmomente herangezogen werden.

Durch die erfindungsgemässe Lösung wird so auf einfache Weise ein variabler Anschluss für Ladebordwand-Plattformen geschaffen.

## Patentansprüche

1. Ladebordwand aus Metall, die an Hubarmen angelenkt ist, insbesondere aus Aluminiumprofilen, dadurch gekennzeichnet, dass zum gelenkigen Anschluss der Hubarme ein torsionssteifer Kasten vorgesehen ist, der aus wenigstens zwei Grundprofilen (1, 2) mit U-förmigen Schenkel (4) und einem verlängerten Steg (3) gebildet ist, wobei die einander zugewandten Schenkel (4) nach entsprechender Besäumung miteinander verschweisst sind und die verlängerten Stege (3) die Bohrungen (6) für die Gelenkbolzen der Hubarme aufnehmen.

2. Ladebordwand nach Anspruch 1, dadurch gekennzeichnet, dass die Grundprofile (1, 2) jeweils zwei parallele Schenkel (4) aufweisen, deren Enden (7) am mittleren Grundprofil (1) gekröpft sind, um ein Überlappen mit den in gleicher Höhe befindlichen Schenkeln (4) der Aussenprofile (2) zu ermöglichen.

3. Ladebordwand nach Anspruch 1 oder 2, dadurch gekennzeichnet, dass die Stege (3) an der Unterseite durch ein aufgeschweisstes Blech (5) zusätzlich miteinander verbunden sind (Fig. 4).

## Claims

1. Loading platform made of metal, being hinged at lifting arms and consisting particularly of aluminium sections, characterized in that for hinging the lifting arms a torsion-proof caisson is provided which consists of at least two basic sections (1, 2) with U-shaped legs (4) and a prolonged web (3), the opposite legs (4) being welded together after being correspondingly trimmed and the prolonged webs (3) taking up the bores (6) for the hinge bolts of the lifting arms.

2. Loading platform according to claim 1, characterized in that the basic sections (1, 2) have two parallel legs (4) each whose ends (7) are cranked at the central basic section (1) so as to make possible an overlapping by the legs (4) of the outer sections (2) which are at the same height.

3. Loading platform according to claim 1 or 2, characterized in that the webs (3) are additionally connected with each other at the lower surface by means of a sheet (5) joined by welding (Fig. 4).

## Revendications

1. Plate-forme métallique de chargement articulée sur des bras élévateurs, consistant notamment en des profilés d'aluminium, caractérisée par le fait qu'il est prévu, en vue du raccordement articulé des bras élévateurs, un caisson rigide à la torsion et formé par au moins deux profilés de base (1, 2) comprenant des branches (4) configurées en U et une âme prolongée (3), les branches (4) tournées les unes vers les autres étant solidarisées par soudage après élimination correspondante, et les âmes prolongées (3) recevant les perçages (6) pour les tourillons d'articulation des bras élévateurs.

2. Plate-forme de chargement selon la revendication 1, caractérisée par le fait que les profilés de base (1, 2) présentent, à chaque fois, deux branches parallèles (4) dont les extrémités (7) sont recourbées sur le profilé de base central (1), de manière à autoriser un recouvrement par les branches (4) des profilés extérieurs (2) situées à la même hauteur.

3. Plate-forme de chargement selon la revendication 1 ou 2, caractérisée par le fait que les âmes (3) sont reliées en plus les unes aux autres, à la face inférieure, par l'intermédiaire d'une tôle (5) rapportée par soudage (figure 4).

Fig. 2

Fig. 3

0 131 871

**Fig. 4**